## Europäisches Patentamt

## European Patent Office

## Office européen des brevets

(19)

(11) Veröffentlichungsnummer: **0 251 048**
**B1**

(12) **EUROPÄISCHE PATENTSCHRIFT**

(45) Veröffentlichungstag der Patentschrift:
19.09.90

(51) Int. Cl.⁵: **G01P 15/08**

(21) Anmeldenummer: 87108756.5

(22) Anmeldetag: 19.06.87

(54) Beschleunigungssensor.

(30) Priorität: 18.06.86 DE 3620452
02.07.86 DE 3622174

(43) Veröffentlichungstag der Anmeldung:
07.01.88 Patentblatt 88/1

(45) Bekanntmachung des Hinweises auf die Patenterteilung:
19.09.90 Patentblatt 90/38

(84) Benannte Vertragsstaaten:
DE FR GB IT NL SE

(56) Entgegenhaltungen:
EP-A- 0 005 798
FR-A- 2 436 368
US-A- 3 877 314
US-A- 3 961 185

(73) Patentinhaber: SCHMIDT FEINTECHNIK GMBH,
Feldbergstrasse 1, D-7742 St. Georgen(DE)

(72) Erfinder: Kuntz, Walter, Prof. Dr.-Ing., Am
Reibschenberg 1, D-7743 Furtwangen(DE)

(74) Vertreter: Patentanwälte Dipl.-Ing. Klaus Westphal Dr.
rer. nat. Bernd Mussgnug Dr. rer.nat. Otto Buchner,
Waldstrasse 33, D-7730 VS-Villingen-Schwenningen(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Beschleunigungssensor nach dem Oberbegriff des Anspruchs 1.

Derartige Beschleunigungssensoren werden in Kraftfahrzeugen, insbesondere Personenkraftwagen verwendet, um eine zu starke Verzögerung festzustellen und daraus auf einen Unfall schließen zu können. Bei Ansprechen des Sensors kann beispielsweise ein Druckluftkissen aufgeblasen oder ein Sicherheitsgurt gestrafft werden. Der Sensor mit einer angeschlossenen Auswerteelektronik muß sicher z.B. zwischen dem Durchfahren von Schlaglöchern und einem Aufprall unterscheiden können.

Aus der US-PS 3 602 037 ist bereits ein Beschleunigungssensor der eingangs genannten Art bekannt, bei welchem das von der Lichtquelle abgewandte, frei bewegliche Ende eines Lichtwellenleiters verspiegelt ist und das reflektierte Licht mittels eines im Strahlengang liegenden, als Strahlenteiler wirkenden halbdurchlässigen Spiegels auf einen Sekundärelektronenvervielfacher gegeben wird. Die Intensität des reflektierten Lichtes ist hierbei von der Auslenkung des Lichtwellenleiters abhängig.

Aus der DE-OS 2 934 859 ist ein mit einer Beschleunigungsmasse und einem druckempfindlichen Modulator arbeitender Beschleunigungssensor bekannt, bei welchem Licht über einen als Y-Koppler ausgebildeten Lichtwellenleiter im Modulator und nach Reflexion innerhalb des Modulators von diesem einem Photosensor zugeleitet wird. Bei dieser Anordnung wird die Veränderung der Lichttransmissionsstärke innerhalb des Modulators in Abhängigkeit von der Druckbeeinflussung ausgenutzt, um auf Beschleunigungen rückschließen zu können. Die Auswertung des Meßwertes, der als amplitudenmodulierte Schwingung gebildet wird, erfolgt mittels einer relativ aufwendigen Demodulationsschaltung.

Der vorliegenden Erfindung liegt die Aufgabe zugrunde, den Beschleunigungssensor der im Oberbegriff angegebenen Art so auszubilden, daß mit ihm kritische Beschleunigungswerte hinsichtlich ihres Betrages und/oder der Wirkungsrichtung der Beschleunigung selektiv und eindeutig detektiert werden können.

Gemäß der Erfindung wird diese Aufgabe bei einem Beschleunigungssensor der eingangs genannten Art mit einem Lichtreflektor gelöst, welcher die mit Anspruch 1 gekennzeichneten Merkmale besitzt. Hiernach entspricht die Reflexionsfläche den unkritischen Beschleunigungswerten, d.h., die äußere Begrenzungslinie der Reflexionsfläche entspricht in Bezug auf das in Ruhelage befindliche Ende des auslenkbaren Stabes vorbestimmten Beschleunigungsgrenzwerten.

Die Erfindungsidee ist in äquivalenter Weise auch mit einer zu obiger Anordnung komplementären realisierbar, bei welcher die Reflexionsfläche durch eine Licht absorbierende Fläche ersetzt ist, die von einer reflektierenden Fläche umgeben ist. In diesem Fall entspricht die reflektierende Fläche den kritischen Beschleunigungswerten.

Auch können die jeweiligen Begrenzungslinien durch einen Bereich stetiger Reflexionszu-oder -abnahme ersetzt werden, was gegebenenfalls die Herstellung der Flächen bzw. die Auswertung der Signale mittels der Elektronik vereinfacht.

Besitzt der auslenkbare Stab, wie nach Anspruch 2 vorausgesetzt, in allen Auslenkrichtungen gleiche Biegeeigenschaften, so kann nach einem weiteren Vorschlag der Erfindung die Reflexionsfläche in ihren Abmessungen anisotrop der Art ausgebildet sein, daß ihre Begrenzungslinie den richtungsabhängigen Beschleunigungsgrenzwerten entspricht.

Die anisotrope Reflexionsfläche hat den Vorteil, daß der Sensor selektiv nach Betrag und Wirkungsrichtung der Beschleunigung reagiert. Der Reaktionsbereich des Sensors ist damit winkelabhängig durch den Abstand der Randlinienpunkte vom geometrischen Mittelpunkt der Reflektorfläche festgelegt. Durch den beliebigen, aber fest vorgegebenen Randlinienverlauf ist es beispielsweise möglich, unterschiedliche Beschleunigungsschwellwerte als Funktion der Wirkungsrichtung zu erzeugen.

Ist der Beschleunigungssensor beispielsweise zur Auslösung der Sicherheitseinrichtungen eines Kraftfahrzeuges bestimmt, welche bei Beschleunigungen in Querrichtung früher als bei Beschleunigungen in Fahrtrichtungen ausgelöst werden sollten, kann die äußere Begrenzungslinie der Reflexionsfläche gemäß Anspruch 4 bzw. insbesondere gemäß Anspruch 4 ausgebildet sein.

Soll dagegen der Beschleunigungssensor in allen Richtungen gleiche Empfindlichkeit aufweisen, kann die Reflexionsfläche als Kreisfläche ausgebildet sein, wie gemäß Anspruch 3 vorgeschlagen ist.

Eine bei dieser Anordnung gewünschte Anisotropie kann durch richtungsabhängige Biegeeigenschaften oder auch durch eine von der Kreisform abweichende Querschnittsform des auslenkbaren Stabes realisiert werden. So kann man zur Erreichung einer vorbestimmten Richtungs-Anisotropie den Biegestab und/oder Reflektor durch geeignete Wahl des Querschnitts oder Materials richtungsabhängig ausbilden oder auch die Wirkungen der beiden Möglichkeiten miteinander kombinieren.

Nach einem weiteren Vorschlag gemäß Anspruch 6 ist die Reflexionsfläche so ausgebildet, daß sie eindeutig zwischen kleinen und großen Beschleunigungswerten unterscheiden kann, d.h., daß sich das vom Beschleunigungssensor abgegebene Signal bei Überschreiten eines vorgegebenen Beschleunigungswertes sprungartig verändert.

Zu diesem Zweck ist ein Reflektor vorgesehen, welcher aus einer inneren punktförmigen Reflexionsfläche besteht, die von einer ringförmigen, im Abstand von dieser verlaufenden zweiten Reflexionsfläche umgeben ist, wobei der Zwischenraum zwischen den beiden Reflexionsflächen geringere Reflexionseigenschaften hat, vorzugsweise lichtabsorbierend ist.

Vergleichbare Eigenschaften erhält man, wenn man statt der Reflexionsflächen lichtabsorbierende Flächen vorsieht und den Zwischenraum lichtreflektierend ausführt.

Bei Verwendung des an sich bekannten Y-Kopplers als Lichtwellenleiter wird unter Ausnutzung obigen Vorschlages ein problemloser, kompakter Aufbau des Beschleunigungssensors erreicht.

Bei nur geringem Aufwand an Elektronik unterscheidet die Anordnung eindeutig zwischen kleinen und großen Auslenkungen des Stabes und damit, bei Anwendung in einem Kraftfahrzeug, zwischen kleinen und großen Fahrzeugbeschleunigungen, so daß Fehlauslösungen der Sicherheitseinrichtungen mit großer Wahrscheinlichkeit vermieden werden.

Mit den Unteransprüchen 8 bis 15 sind weitere vorteilhafte Ausgestaltungen der Erfindungen im einzelnen angegeben.

Nach dem Vorschlag gemäß Anspruch 8 kann der auslenkbare Stab selbst als Lichtwellenleiter ausgebildet sein.

Soll der Stab dagegen aus Zweckmäßigkeitsgründen aus anderem Material bestehen, bietet sich die Lösung gemäß Anspruch 9 an, nach welcher das auslenkbare Ende des Stabes den Lichtreflektor trägt und dem Fuß des Y-Kopplers gegenüberliegend angeordnet ist.

Durch die Trennung des einfallenden und des reflektierten Lichtes im Y-Koppler kann der Sensor jederzeit auch an optische Sammelleitungen, sogenannte Busse, angeschlossen werden.

Nach den mit den Ansprüchen 10 und 11 gekennzeichneten Merkmalen ist es, wie ferner vorgeschlagen wird, zweckmäßig, den Durchmesser des Reflektors jeweils dem Durchmesser des Fußes des Y-Kopplers bzw. dem Durchmesser des Lichtwellenleiters bei Verwendung eines solchen als auslenkbarer Stab anzupassen, wodurch die Aussagegenauigkeit des Sensors gesteigert werden kann.

Eine weitere Erhöhung der Genauigkeit kann durch eine seismische Masse gemäß Anspruch 12 und/oder zweckmäßige Dämpfung des auslenkbaren Stabendes gemäß den Ansprüchen 13 und 14 erzielt werden.

Bei einer weiteren vorteilhaften Ausgestaltung der Erfindung gemäß Anspruch 15 kann eine sehr einfache Funktionsprüfung des Sensors mittels eines Aktorelements, vorzugsweise in . Form eines Magneten, durchgeführt werden, das manuell oder elektrisch betätigt werden kann und eine absichtliche Auslenkung des Stabendes bewirkt.

Anhand der Figuren werden Ausführungsbeispiele der Erfindung näher erläutert. Es zeigen

Figur 1 - einen schematischen Schnitt durch das Sensorgehäuse einer ersten Ausführungsform,

Figur 2 - eine Aufsicht auf einen Reflektor nach einem ersten Vorschlag,

Figur 2a - eine Aufsicht des Reflektors in Richtung II-II in Figur 1 gesehen nach einem zweiten Vorschlag,

Figur 3 und 4 - der Figur 1 entsprechende Schnitte durch zwei weitere Ausführungsformen.

In allen Figuren sind gleiche oder gleichartige Teile mit den gleichen Bezugszeichen versehen.

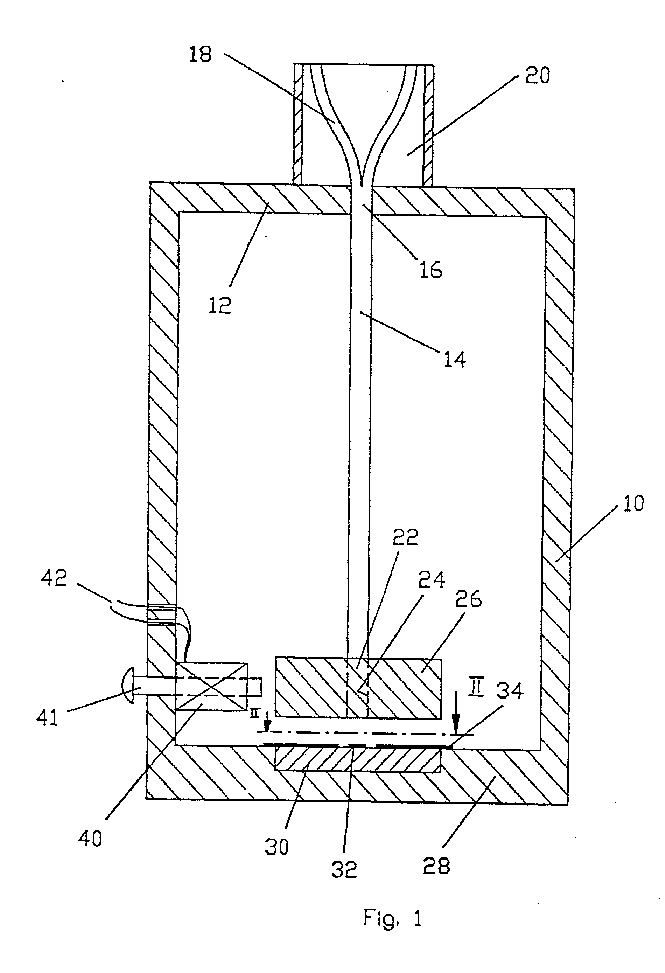

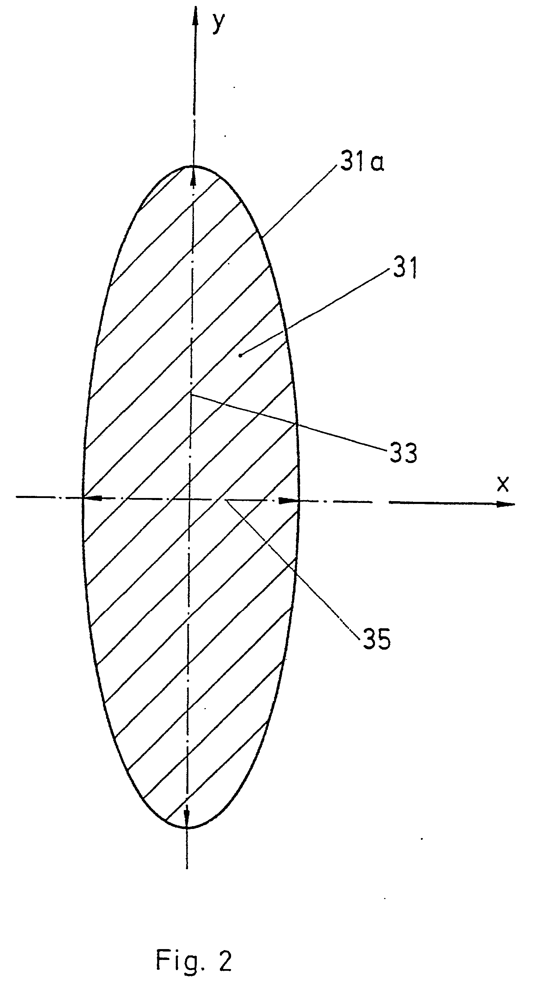

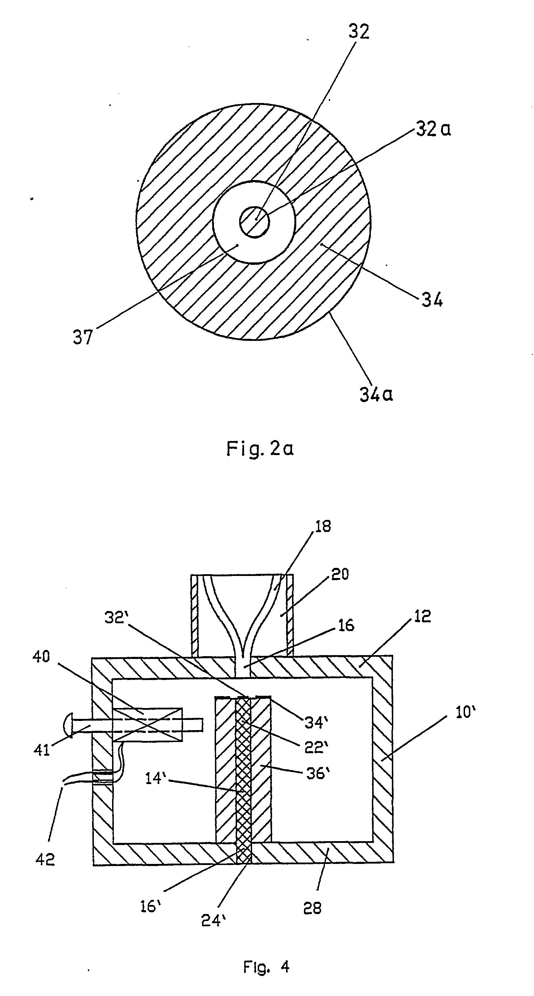

Bei der in den Figuren 1 und 2 dargestellten ersten Ausführungsform ist ein kastenförmiges, im wesentlichen geschlossenes Gehäuse 10 vorgesehen, in dessen Oberwand 12 ein stabförmiger Lichtwellenleiter 14 mit seinem oberen Ende 16 fest eingespannt ist. Das obere Ende 16 des Lichtwellenleiters 14 geht einstückig in einen Y-Koppler 18 über, der aus der Oberwand 12 nach außen steht. Der Fuß des Y-Kopplers 18 fällt mit dem Ende 16 zusammen. Der Y-Koppler 18 ist durch einen auf die Oberwand 12 aufgesetzten Gehäusestutzen 20 geschützt. Die an den Y-Koppler anschließenden optischen und elektronischen Einrichtungen sind, da sie dem Fachmann geläufig sind und keinen Teil der Erfindung darstellen, nicht gezeigt. Das untere Ende 22 des stabförmigen Lichtwellenleiters 14 ist bei seitlichen Stößen in beliebiger Richtung frei auslenkbar und durchsetzt eine durchgehende Öffnung 24 eines Magneten 26, der im wesentlichen die Form einer Kreisscheibe besitzt. Der Magnet 26 ist auf dem Ende 22 befestigt.

In der Bodenwand 28 des Gehäuses 10 ist ein mit dem Magneten 26 zusammenwirkender Gegenmagnet 30 eingebettet. Durch das Zusammenwirken der beiden Magnete 26 und 30 wird eine Auslenkung des unteren Stabendes 22 stark gedämpft, so daß ein ungewolltes Ansprechen des Sensors durch geeignete Wahl der Magnetstärke weitgehend ausgeschlossen werden kann. Eine vergleichbare Wirkung erreicht man, wenn das Teil 30 als magnetischer Kurzschluß durch ein magnetisch gut leitendes Material ausgebildet ist.

Dem Ende 22 des Lichtwellenleiters 24 gegenüber ist auf der Innenseite der Bodenwand 28 ein Lichtreflektor konzentrisch zur Ruhelage des Endes 22 angeordnet.

Nach dem Vorschlag, wie er in Figur 2 dargestellt ist, ist dieser Lichtreflektor 31 von einer Ellipse 31a begrenzt, deren größerer Durchmesser bzw. deren längere Achse 33 in Y-Richtung und deren kürzerer Durchmesser bzw. deren kürzere Achse 35 in X-Richtung verlaufen. Ein Beschleunigungssensor mit einem derartigen Reflektor eignet sich insbesondere zur Steuerung der Sicherheitseinrichtungen eines Kraftfahrzeuges, wobei die Reflektorfläche in Bezug auf das Fahrzeug so anzuordnen ist, daß die Y-Achse in Fahrtrichtung weist. Da die Ellipse 31a den Beschleunigungsgrenzwerten entspricht, bei welchen die Sicherheitseinrichtung ausgelöst wird, wird ein derartiger Beschleunigungssensor bei einem Frontalzusammenstoß später als bei einem seitlichen Aufprall ansprechen.

Nach einem zweiten Vorschlag, wie in Figur 2a veranschaulicht ist, besteht der Reflektor aus einer inneren etwa punktförmigen Reflektorfläche 32 mit einem kreisförmigen Begrenzungsrand 32a und einer äusseren, kreisringförmigen Reflektorfläche 34, die im Abstand zur inneren Reflektorfläche und konzentrisch zu dieser angeordnet ist. Auch hier ist zumindest die äussere Reflektorfläche 34 so bemessen und angeordnet, daß ihr kreisförmiger Begrenzungsrand 34a den kritischen Beschleunigungsgrenzwerten entspricht, wobei das Ende 22 des Lichtwellenleiters 14 in Ruhelage konzentrisch zur inneren Reflektorfläche 32 gelegen ist. Der Durchmesser dieser Reflektorfläche 32 ist zweckmäßigerweise etwas geringer als der Durchmesser des Lichtwellenleiters 14. Der Innendurchmesser der konzentrischen, kreisringförmigen Reflektorfläche 34 ist etwas größer als der Durchmesser des Lichtwellenleiters 14. Der gleichfalls kreisringförmige Zwischenraum 37 ist nicht reflektierend, vorzugsweise lichtabsorbierend.

Durch die oben erläuterte geometrische Anordnung ist gewährleistet, daß nur bei wirklich starken Stössen oder auch bei einem Überschlag des Kraftfahrzeugs eine Auslösung des Sensors erfolgt, da nur bei starker Auslenkung des flexiblen Lichtwellenleiters ein sprunghaft ansteigendes Signal erzeugt wird.

Es ist selbstverständlich denkbar, die nicht punktsymmetrische Reflektoranordnung gemäß Figur 2 mit der Reflektoranordnung gemäß Figur 2a der Art zu kombinieren, daß sich die vorteilhaften Eigenschaften beider Reflektoranordnungen ergänzen und überlagern.

Bei der Ausbildung des Beschleunigungssensors gemäß Figur 1 wird Licht durch einen Arm des Y-Kopplers 18 in den Lichtwellenleiter 14 eingeleitet und tritt aus dem Ende 22 aus. Es trifft in der Ruhelage zum Teil auf den Reflektor 32, wird von diesem in den Lichtwellenleiter 14 reflektiert und gelangt aus dem anderen Arm des Y-Kopplers zu den entsprechenden optisch-elektronischen Einrichtungen zur Weiterverarbeitung des Signals. Wenn bei einem starken Stoß unter Überwindung der zwischen den Magneten 26 und 30 herrschenden Magnetkraft eine Auslenkung des Endes 22 erfolgt, wird zunächst weniger Licht reflektiert, während sodann bei Überdeckung des Endes 22 mit dem kreisringförmigen äußeren Lichtreflektor 34 ein starker Anstieg der Reflexion erfolgt. Der am unteren Ende 22 des Lichtwellenleiters 14 befestigte Magnet 26 stellt gleichzeitig eine verhältnismäßig große seismische Masse dar. Durch das Zusammenwirken dieser Merkmale wird eine sichere Auslösung des Sensors bei stärkeren Stößen in allen seitlichen Richtungen gewährleistet.

Nahe dem auslenkbaren Ende 22 des Lichtwellenleiters 14 ist in der Seitenwand des Gehäuses 10 ein Aktorelement 40 innerhalb des Gehäuses angeordnet, das durch Eindrücken des nach außen stehenden, druckknopfartigen Endes eines Stößels 41 oder, falls das Aktorelement 40 als Magnet ausgebildet ist, über durch das Gehäuse 10 nach außen geführte elektrische Leitungen 42 so betätigbar ist, daß der Stößel 41 in seiner nicht dargestellten, nach innen gedrückten bzw. gezogenen Stellung den Magneten 26 und somit das auslenkbare Ende 22 des Lichtwellenleiters 14 zur Funktionsprüfung des Sensors definiert auslenkt.

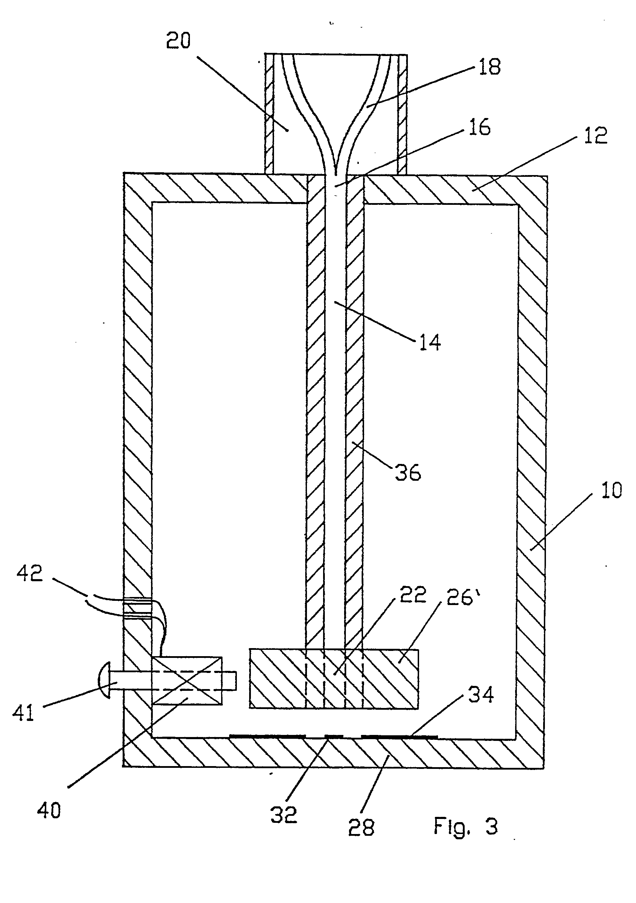

Die in Figur 3 dargestellte zweite Ausführungsform unterscheidet sich von der oben geschilderten ersten Ausführungsform im wesentlichen dadurch, daß die seismische Masse 26' nicht als Magnet ausgebildet ist und daß kein Gegenmagnet in der Bodenwand 28 vorgesehen ist.Die Dämpfung der Auslenkung und Positionierung des unteren Endes 22 des Lichtwellenleiters 14 erfolgt hier vielmehr durch ein dünnwandiges, verhältnismäßig elastisches Rohr 36, das den Lichtwellenleiter 14 vom oberen Ende 16 bis zum unteren Ende 22 umfaßt. Im übrigen is die Wirkungsweise des Sensors bei dieser zweiten Ausführungsform die gleiche wie oben in Verbindung mit der ersten Ausführungsform beschrieben.

Bei der in Figur 4 gezeigten dritten Ausführungsform ist ein wesentlich kürzeres Gehäuse 10' vorgesehen, das eine gedrängtere Bauweise zuläßt. Hier besteht das auslenkbare Element nicht aus einem Lichtwellenleiter sondern aus einem vorzugsweise aus Metall hergestellten Biegestab 14'. Der Stab 14' ist mit seinem unteren Ende 16' in einer Bohrung 24' der Bodenwand 28 einseitig eingespannt, während sein oberes Ende 22' bei Einwirkung von Stößen nach allen Seiten frei auslenkbar ist. Zur Dämpfung ist der Stab 14' wiederum von einem schwingungsdämpfenden, elastischen Rohr 36' umfaßt, das auf der Innenseite der Bodenwand 28 aufliegt. Stab 14' und Rohr 36' enden im Abstand unterhalb des Fußes 16 des Y-Kopplers 18. Auf der freien Stirnfläche von Stab 14' und Rohr 36' ist wiederum ein zentraler kreisförmiger Lichtreflektor 32' und ein diesen im Abstand konzentrisch umfassender kreisringförmiger Lichtreflektor 34' angeordnet.

Bei Auslenkung des oberen Stabendes 22' wird das aus dem Fuß Y-Kopplers 18 austretende Licht in gleicher Weise von den Lichtreflektoren 32' und 34' reflektiert wie das aus dem Ende 22 des Lichtwellenleiters 14 austretende Licht von den Lichtreflektoren 32 und 34 bei der ersten und zweiten Ausführungsform .

Bei dieser Ausführungsform wirkt der Stößel 41 des Aktorelementes 40 bei Betätigung zur Funktionsprüfung unmittelbar auf das Rohr 36' am auslenkbaren Ende 22' des Stabes 14' ein.

Bei allen drei Ausführungsformen kann die Verbindung des Y-Kopplers 18 mit den anzuschließenden optischen und elektronischen Einrichtungen über eine nicht gezeigte Steckverbindung hergestellt werden, die am Gehäusestutzen 20 befestigt werden kann.

## Patentansprüche

1. Beschleunigungssensor mit einem in einem Gehäuse (10, 10') einseitig eingespannten, nach allen Seiten auslenkbaren Stab (14, 14'), dessen auslenkbarem Ende (22, 22') Licht zugeführt wird, das in Abhängigkeit von der Auslenkung des Stabes (14, 14') mittels eines Lichtreflektors vollständig, teilweise oder nicht reflektierbar ist, wobei das reflektierte Licht von einem Photosensor empfangen wird, dadurch gekennzeichnet, daß der Lichtreflektor eine Reflexionsfläche (31; 32, 34) besitzt, deren äußere Begrenzungslinie (31a; 34a) in bezug auf das in Ruhelage befindliche Ende (22, 22') des auslenkbaren Stabes (14, 14') vorbestimmten Beschleunigungsgrenzwerten entspricht.

2. Beschleunigungssensor nach Anspruch 1, dadurch gekennzeichnet, daß der auslenkbare Stab (14, 14') in allen Auslenkrichtungen gleiche Biegeeigenschaften besitzt und die Reflexionsfläche (31) in ihren Abmessungen anisotrop der Art ist, daß ihre Begrenzungslinie (31a) richtungsabhängigen Beschleunigungsgrenzwerten entspricht.

3. Beschleunigungssensor nach Anspruch 1, dadurch gekennzeichnet, daß die Begrenzungslinie (34a) der Reflexionsfläche (32, 34) ein Kreis ist.

4. Beschleunigungssensor nach Anspruch 2, dadurch gekennzeichnet, daß die äußere Begrenzungslinie (31a) der Reflexionsfläche (31) ein geschlossener Linienzug ist, deren größter Durchmesser (33) in einer Richtung größer als der größte Durchmesser (35) in einer zur ersten Richtung quer verlaufenden Richtung ist.

5. Beschleunigungssensor nach Anspruch 4, dadurch gekennzeichnet, daß die äußere Begrenzungslinie (31a) eine Ellipse ist.

6. Beschleunigungssensor nach einem der Ansprüche 1 bis 5, dadurch gekennzeichnet, daß eine erste Reflexionsfläche (32) von einer ringförmigen, im Abstand von dieser verlaufenden zweiten Reflexionsfläche (34) umgeben ist und daß der Zwischenraum (37) zwischen den beiden Reflexionsflächen (32, 34) geringere Reflexionseigenschaft hat, vorzugsweise lichtabsorbierend ist.

7. Beschleunigungssensor nach einem der Ansprüche 1 bis 6, dadurch gekennzeichnet, daß das Licht mittels eines als Y-Koppler (18) ausgebildeten Lichtwellenleiters zugeführt und nach Reflexion von diesem dem Photosensor zugeleitet wird.

8. Beschleunigungssensor nach Anspruch 7, dadurch gekennzeichnet, daß der auslenkbare Stab (14) als Lichtwellenleiter ausgebildet ist und daß der Y-Koppler (18) in den Lichtwellenleiter übergeht, wobei der Lichtreflektor (31, 32, 34) an einem dem auslenkbaren Ende (22) gegenüberliegenden Gehäuseteil (28) angebracht ist.

9. Beschleunigungssensor nach Anspruch 7, dadurch gekennzeichnet, daß das auslenkbare Ende (22') den Lichtreflektor (32', 34') trägt und dem Fuß (16) des Y-Kopplers (18) gegenüberliegt.

10. Beschleunigungssensor nach Anspruch 8 oder 9, dadurch gekennzeichnet, daß die Innenabmessungen des ringförmigen Lichtreflektors (34, 34') größer sind als der Durchmesser des Lichtwellenleiters (14) bzw. des Fußes (16) des Y-Kopplers (18).

11. Beschleunigungssensor nach Anspruch 8 oder 9, dadurch gekennzeichnet, daß die Außenabmessungen des punktförmigen Reflektors (32, 32') kleiner als der oder etwa gleich dem Durchmesser des Lichtwellenleiters (14) bzw. des Fußes (16) des Y-Kopplers sind.

12. Beschleunigungssensor nach Anspruch 8, 10 oder 11, dadurch gekennzeichnet, daß am auslenkbaren Ende (22) eine seismische Masse (26, 26') angebracht ist.

13. Beschleunigungssensor nach Anspruch 12, dadurch gekennzeichnet, daß die seismische Masse (26) als Magnet ausgebildet ist, der mit einem gehäusefesten Magneten oder magnetischen Kurzschluß (30) zur Dämpfung der Auslenkung des Stabes (14) zusammenwirkt.

14. Beschleunigungssensor nach einem der Ansprüche 8 bis 12, dadurch gekennzeichnet, daß der Stab (14, 14') von einem die Auslenkung dämpfenden, elastischen Rohr (36, 36') umgeben ist.

15. Beschleunigungssensor nach einem der Ansprüche 7 bis 14, dadurch gekennzeichnet, daß zwecks Funktionsprüfung des Sensors senkrecht zum Stab (14, 14') ein Aktorelement (40), vorzugsweise ein Magnet, angeordnet ist, das durch manuelle Betätigung eines Drucktasters (41) oder durch eine elektrische Ansteuerung über Anschlußleitungen (42) eine Auslenkung des Stabendes (22, 22') bewirkt.

**Claims**

1. An acceleration sensor comprising, fixed at one end in a housing (10, 10'), a rod (14, 14') which is deflectable in all directions, to the deflectable end (22, 22') of which light is supplied which, depending on the deflection of the rod (14, 14'), can be reflected completely, partially, or not at all by a light reflector, wherein the reflected light is received by a photosensor, characterized in that the light reflector comprises a reflection surface (31; 32, 34) the outer boundary (31a; 34a) of which, in relation to the end (22, 22') of the deflectable rod (14, 14') when in the undeflected position, corresponds to predetermined acceleration limit values.

2. An acceleration sensor according to Claim 1, characterized in that the deflectable rod (14, 14') possesses equal bending properties in all directions of deflection and the dimensions of the reflection surface (31) are anisotropic in such a way that its boundary line (31a) corresponds to direction-dependent acceleration limit values.

3. An acceleration sensor according to Claim 1, characterized in that the boundary (34a) of the reflection surface (32, 34) is a circle.

4. An acceleration sensor according to Claim 2, characterized in that the outer boundary (31a) of the reflection surface (31) is a closed continuous line the greatest diameter (33) of which in a first direction is greater than the greatest diameter (35) in a direction at right angles to the first direction.

5. An acceleration sensor according to Claim 4, characterized in that the outer boundary (31a) is an ellipse.

6. An acceleration sensor according to any one of Claims 1 to 5, characterized in that a first reflection surface (32) is surrounded by an annular second reflection surface (34) extending at a distance from the former and in that the space (37) between the two reflection surfaces (32, 34) has lower reflectivity, and preferably absorbs light.

7. An acceleration sensor according to any one of Claims 1 to 6, characterized in that the light is supplied by means of a light wave conductor built in the form of a Y-shaped coupler (18) and after reflection is led from this to the photosensor.

8. An acceleration sensor according to Claim 7, characterized in that the deflectable rod (14) is built as a light wave conductor and that the Y-shaped coupler (18) is continuous with the light wave conductor and the light reflector (31, 32, 34) is fastened on a portion (29) of the housing opposite the deflectable end (22).

9. An acceleration sensor according to Claim 7, characterized in that the deflectable end (22') carries the light reflector (32', 34') and is located opposite the foot (16) of the Y-shaped coupler (18).

10. An acceleration sensor according to Claim 8 or 9, characterized in that the internal dimensions of the annular light reflector (34, 34') are greater than the diameter of the light wave conductor (14) or the foot (16) of the Y-shaped coupler (18) respectively.

11. An acceleration sensor according to Claim 8 or 9, characterized in that the external dimensions of the spot reflector (32, 32') is smaller than or almost equal to the diameter of the light wave conductor (14) or the foot (15) of the Y-shaped coupler respectively.

12. An acceleration sensor according to Claim 8, 10 or 11, characterized in that a seismic mass (26, 26') is fastened to the deflectable end (22).

13. An acceleration sensor according to Claim 12, characterized in that the seismic mass (25) is built in the form of a magnet which interacts with a magnet fixed to the housing or with a magnetic short circuit (30) in order to damp the deflection of the rod (14).

14. An acceleration sensor according to any one of Claims 8 to 12, characterized in that the rod (14, 14') is surrounded by an elastic tube (36, 36') which damps the deflection.

15. An acceleration sensor according to any one of Claims 7 to 14, characterized in that in order to test the functioning of the sensor an actuator element (40), preferably a magnet, is located at right angles to the rod (14, 14') which actuator, as a result of manual actuation of a push-button (41) or of electrical actuation by means of a connecting circuit (42), causes a deflection of the end (22, 22') of the rod.

## Revendications

1. Détecteur d'accélération, comportant une barre (14, 14') enserrée d'un seul côté dans un boîtier (10, 10'), susceptible d'être déviée de tous côtés, à l'extrémité (22, 22') susceptible d'être déviée de laquelle est amenée de la lumière, qui, en fonction de la déviation de la barre (14, 14'), est susceptible, au moyen d'un réflecteur de lumière, d'être réfléchie entièrement, partiellement, ou pas du tout, la lumière réfléchie étant captée par un détecteur photo-électrique, détecteur d'accélération caractérisé en ce que le réflecteur de lumière comporte une surface réfléchissante (31 ; 32, 34), dont la ligne de délimitation extérieure (31a ; 34a) correspond, par rapport à l'extrémité (22, 22'), se trouvant en position de repos, de la barre (14, 14') susceptible d'être déviée, à des valeurs-limites d'accélération prédéterminées.

2. Détecteur d'accélération selon la revendication 1, caractérisé en ce que la barre (14, 14') susceptible d'être déviée comporte les mêmes propriétés de flexibilité dans toutes les directions de déviations, et la surface réfléchissante (31) est anisotrope dans ses dimensions de manière que sa ligne de délimitation (31a) corresponde à des valeurs-limites d'accélération dépendantes de la direction.

3. Détecteur d'accélération selon la revendication 1, caractérisé en ce que la ligne de délimitation (34a) de la surface réfléchissante (32, 34) est un cercle.

4. Détecteur d'accélération selon la revendication 2, caractérisé en ce que la ligne de délimitation extérieure (31a) de la surface réfléchissante (31) est un tracé de contour fermé, dont le plus grand diamètre (33) est supérieur dans une direction au plus grand diamètre (35) dans une direction s'étendant transversalement par rapport à la première direction.

5. Détecteur d'accélération selon la revendication 4, caractérisé en ce que la ligne de délimitation extérieure (31a) est une ellipse.

6. Détecteur d'accélération selon l'une des revendications 1 à 5, caractérisé en ce qu'une première surface réfléchissante (32) est entourée par une seconde surface réfléchissante (34) de forme annulaire s'étendant à distance de la première, et en ce que l'espace intercalaire (37) entre les deux surfaces réfléchissantes (32, 34) présente une propriété de réflexion moindre, de préférence est apte à absorber la lumière.

7. Détecteur d'accélération selon l'une des revendications 1 à 6, caractérisé en ce que la lumière est amenée au moyen d'un guide d'ondes lumineuses constitué sous la forme de coupleur en Y (18) et, après avoir été réfléchie, est envoyée de celui-ci au détecteur photo-électrique.

8. Détecteur d'accélération selon la revendication 7, caractérisé en ce que la barre (14) susceptible d'être déviée est constituée en tant que guide d'ondes lumineuses, et en ce que le coupleur en Y (18) se continue par le guide d'ondes lumineuses, le réflecteur de lumière (31, 32, 34) étant monté sur une partie de boîtier (28) faisant face à l'extrémité (22) susceptible d'être déviée.

9. Détecteur d'accélération selon la revendication 7, caractérisé en ce que l'extrémité (22') susceptible d'être déviée porte le réflecteur de lumière (32', 34') et fait face au pied (16) du coupleur en Y (18).

10. Détecteur d'accélération selon la revendication 8 ou 9, caractérisé en ce que les dimensions intérieures du réflecteur de lumière (34, 34') de forme annulaire sont supérieures au diamètre du guide d'ondes lumineuses (14) comme aussi bien du pied (16) du coupleur en Y (18).

11. Détecteur d'accélération selon la revendication 8 ou 9, caractérisé en ce que les dimensions extérieures du réflecteur (32, 32') de forme ponctuelle sont inférieures ou à peu près égales au diamètre du guide d'ondes lumineuses (14) comme aussi bien du pied (16) du coupleur en Y.

12. Détecteur d'accélération selon la revendication 8, 10 ou 11, caractérisé en ce que sur l'extrémité (22) susceptible d'être déviée est montée une masse sismique (26, 26').

13. Détecteur d'accélération selon la revendication 12, caractérisé en ce que la masse sismique (26) est constituée sous la forme d'aimant, qui coopère avec un aimant ou court-circuit magnétique (30), solidaire du boîtier, en vue d'amortir la déviation de la barre (14).

14. Détecteur d'accélération selon l'une des revendications 8 à 12, caractérisé en ce que la barre (14, 14') est entourée par un tube élastique (36, 36') amortissant la déviation.

15. Détecteur d'accélération selon l'une des revendications 7 à 14, caractérisé en ce que, en vue du contrôle de fonctionnement du détecteur, perpendiculairement à la barre (14, 14') est disposé un élément (40) de mise en fonctionnement, de préférence un aimant, qui, sous l'effet d'une manoeuvre manuelle d'un bouton-poussoir (41) ou sous l'effet d'une mise en action électrique par l'intermédiaire de conduites de raccordement (42), provoque une déviation de l'extrémité (22, 22') de la barre.

Fig. 1

Fig. 2

Fig. 2a

Fig. 4

Fig. 3